# EUROPEAN PATENT APPLICATION

(11) **EP 4 844 928 A1**
(43) Date of publication of application: **25.11.2026**
(21) Application number: 26167294.3
(22) Date of filing: 24.03.2026
(51) Int. Cl.: H01M 50/383, H01M 50/204, H01M 50/211, H01M 50/271, H01M 50/291

(54) **BATTERY APPARATUS AND METHOD OF MANUFACTURING BATTERY APPARATUS**

(30) Priority: 23.05.2025 KR 20250067464
(71) Applicant: SK On Co., Ltd., Seoul 03161 (KR)
(72) Inventor: CHOI, Keun Woo, 34124 Daejeon (KR); KIM, Do Youn, 34124 Daejeon (KR); JANG, Yong Hee, 34124 Daejeon (KR); JEONG, Ju Young, 34124 Daejeon (KR)
(74) Representative: Prüfer & Partner mbB Patentanwälte · Rechtsanwälte

(57) **Abstract**

A battery apparatus (100) comprising a plurality of battery cells (110) with electrode leads (111); a plurality of busbar assemblies (120), each having a busbar member (121) supported by an electrically insulating busbar plate (122); at least one cover plate (130); and a flame-retardant member (131) mounted in the at least one cover plate to face the busbar plate or busbar assembly. The busbar plate may comprise one or more protruding members (123) that physically contact the flame-retardant member, thereby spacing it from conductive elements and controlling its thermal expansion during use or runaway events.

## Description

### BACKGROUND

### Technical Field

The present disclosure relates to a battery apparatus and method of manufacturing a battery apparatus.

Battery cells are widely used in small electronic devices, such as mobile phones and laptop computers, as well as medium- to large-sized mechanical devices such as electric vehicles (EVs) and are rechargeable and reusable.

The electrodes of a battery cell may include a cathode and an anode, each of which may include a cathode plate containing a cathode active material and an anode plate containing an anode active material, respectively.

An electrode assembly may be formed by interposing a separator between the cathode plate and the anode plate and electrically isolating the cathode plate and the anode plate. The electrode assembly may be manufactured in a stacked, stack-folded, or wound configuration.

The electrode assembly may be accommodated, together with an electrolyte, in a case selected for intended use, such as a pouch, square, or cylindrical case, and the case may be sealed to manufacture a battery cell.

A battery apparatus may be manufactured by including a plurality of battery cells. For example, a battery apparatus may include a battery module, a battery pack, or an energy storage system, each of which electrically connects a plurality of battery cells via busbars or the like.

### SUMMARY

According to an aspect of the present disclosure, a battery apparatus preventing thermal events and the propagation of foreign substances between a plurality of battery cells, and a method of manufacturing the battery apparatus, are provided.

Furthermore, according to an aspect of the present disclosure, a battery apparatus having improved assembly efficiency, and a method of manufacturing the battery apparatus, are provided.

Furthermore, the present disclosure may be widely applied to green technology fields such as solar power generation and wind power generation.

Furthermore, the present disclosure may be applied to eco-friendly devices such as eco-friendly electric vehicles and hybrid vehicles that ameliorate the effects of climate change by suppressing air pollution and greenhouse gas emissions.

In one aspect, provided herein is a battery apparatus, comprising:
a plurality of battery cells comprising a plurality of electrode leads;
a plurality of busbar assemblies, each busbar assembly comprising (i) a busbar member connected to a portion of the plurality of electrode leads and (ii) a busbar plate supporting the busbar member;
a cover plate comprising a flame-retardant member and facing the busbar plate in each of the busbar assemblies; and
wherein the busbar plate comprises one or more protruding members extending toward and in contact with the flame-retardant member.

In a preferred embodiment, each of the one or more protruding members is disposed between adjacent electrode leads. In one embodiment, the busbar plate comprises a plurality of protruding members.

In a preferred embodiment, each of the protruding members has a height that is greater than or equal to a height of the electrode lead and less than or equal to a height of the battery cell.

In a preferred embodiment, the height of the busbar plate is greater than or equal to the height of the electrode lead and less than or equal to the height of the battery cell, and the height of each of the protruding members is equal to or greater than the height of the busbar plate.

In a preferred embodiment, the height of the busbar plate is greater than or equal to the height of each respective electrode lead and less than or equal to the height of the battery cell, and the height of each of the protruding members is less than the height of the busbar plate.

In a preferred embodiment, the busbar plate and each of the protruding members comprise an electrically insulating material.

In a preferred embodiment, the busbar plate and the protruding members are formed by integrated injection molding or double injection molding.

In a preferred embodiment, the flame-retardant member comprises a fibrous material or expandable graphite. In one embodiment, the flame-retardant member comprises a body region and one or more support members extending from the body region and facing or contacting one or more of the protruding members of the busbar plate.

In a preferred embodiment, the one or more support members comprise a first fibrous material or expandable graphite, and the body region of the flame-retardant member comprises a second fibrous material or expandable graphite, wherein the first fibrous material or expandable graphite is different than the second fibrous material or expandable graphite.

In a preferred embodiment, the flame-retardant member is spaced apart from the busbar member by a first distance. In one embodiment, the first distance is 1 mm or more and 5 mm or less.

In a preferred embodiment, the at least one cover plate comprises a first type of vent hole. In one embodiment, the cover plate comprises a plurality of the first type of vent hole. The first type of vent hole may be, for example, a slot or a notch.

In another aspect, the present disclosure provides a battery assembly comprising the battery apparatus according to any embodiment as disclosed herein, a plurality of side plates disposed to couple to at least one cover plate of the battery apparatus; and a case frame coupled to the plurality of side plates and spaced from the plurality of battery cells in the battery apparatus by a second distance.

In a preferred embodiment, the case frame comprises at least one second type of vent hole. In one embodiment, the case frame comprises a plurality of the second type of vent holes.

The present disclosure according to another aspect provides a method of manufacturing a battery apparatus, the method comprising electrically connecting the plurality of electrode leads to the busbar member; and bringing each of the protruding member(s) into contact with the flame-retardant member.

In a preferred embodiment, the protruding member(s) may be brought into contact with the flame-retardant member such that a contact region between the protruding member(s) and the flame-retardant member does not overlap the first type of vent hole provided in the at least one cover plate.

### BRIEF DESCRIPTION OF DRAWINGS

Certain aspects, features, and advantages of the present disclosure are illustrated by the following detailed description with reference to the accompanying drawings.
FIG. 1 is a schematic exploded perspective view of a battery apparatus according to an embodiment of the present disclosure.
FIG. 2 is a schematic perspective view of a battery apparatus according to an embodiment of the present disclosure.
FIG. 3 is a schematic exploded perspective view of a battery cell, a busbar member, and a busbar plate according to an embodiment of the present disclosure.
FIG. 4 is a schematic perspective view of a region below line I-I' of FIG. 2.
FIG. 5 is a schematic perspective view of a battery cell according to an embodiment of the present disclosure.
FIG. 6 is a schematic view of a portion of a busbar plate, a busbar member, an electrode lead, a flame-retardant member, and a cover plate according to an embodiment of the present disclosure, taken along line II-II' of FIG. 4.
FIG. 7 is a schematic front view of a busbar plate, a protruding member, and a battery cell according to an embodiment of the present disclosure.
FIG. 8 is a schematic front view of a busbar plate, a protruding member, and a battery cell according to another embodiment of the present disclosure.
FIG. 9 is a schematic cross-sectional view of a portion of a battery apparatus according to another embodiment of the present disclosure.
FIG. 10 is a perspective view of a region below line I-I' of FIG. 2, schematically illustrating a battery apparatus according to another embodiment of the present disclosure.
FIG. 11 is a schematic perspective view of a battery apparatus according to another embodiment of the present disclosure.
FIG. 12 is a schematic perspective view of a battery apparatus according to another embodiment of the present disclosure.
FIG. 13 is a schematic cross-sectional view of a portion of a battery apparatus according to another embodiment of the present disclosure.
FIG. 14 is a schematic illustration of a method of manufacturing a battery apparatus according to an embodiment of the present disclosure.

### DETAILED DESCRIPTION

In order to help understand the description of an embodiment of the present disclosure, elements described with the same symbol in the attached drawings are the same elements. Some components of the attached drawings are exaggerated, omitted, or schematically illustrated, and sizes of each component do not completely reflect actual sizes.

Additionally, in order to clarify the gist of the present disclosure, descriptions of elements and techniques well known by conventional techniques will be omitted, and hereinafter, the present disclosure will be described in detail with reference to the attached drawings. However, this is merely exemplary, and the present disclosure is not limited to the specific embodiments described as examples.

An "embodiment" mentioned below does not necessarily refer to the same embodiment. Specific features, structures, or characteristics may be combined or substituted in any suitable manner consistent with the present disclosure.

Hereinafter, an X-axis illustrated in the drawings represents a width direction of a battery cell (identified as element 110 in the Figures), a Y-axis represents a height direction of the battery cell 110, and a Z-axis represents a thickness direction of the battery cell 110. However, these are arbitrarily set directions for ease of understanding, and the aforementioned directions may be changed.

In the attached drawings, a point at which the X-axis, the Y-axis and the Z-axis intersect may be an origin or zero point. Any region in the attached drawings may be the origin or zero point. When any region or point in the attached drawings is set as the origin or zero point, the X-axis, the Y-axis, and the Z-axis illustrated in the drawings may maintain the same state as illustrated in the drawings with respect to the set origin or zero point. In addition, the X-axis, the Y-axis, and the Z-axis illustrated in the attached drawings are illustrated in a positive (+) direction, and a negative (-) direction may be understood as an opposite direction to the positive (+) direction with respect to the origin or zero point. In addition, "opposing" and "facing" hereinafter may mean a state in which two or more components face each other. In this case, some other material may be interposed between the two components, and the two components may directly face each other in a state in which any other material is not interposed between the two components.

As will be described further herein, disclosed is a battery apparatus designed to mitigate thermal events and prevent propagation of gas and foreign substances among cells by using a flame-retardant material positioned in a cover plate and contacting a specially protruding member of an electrically insulating busbar plate that supports metal busbars connected to cell leads. The busbar plate incorporates one or more protruding members that physically contact the flame-retardant member, thereby spacing it from conductive elements and controlling its thermal expansion during use or runaway events.

The battery apparatuses and assemblies described herein may be widely applied to green technology fields, such as solar power generation and wind power generation. For example, the battery apparatuses and assemblies described herein may be applied to eco-friendly devices such as eco-friendly electric vehicles and hybrid vehicles that prevent climate change by suppressing air pollution and greenhouse gas emissions.

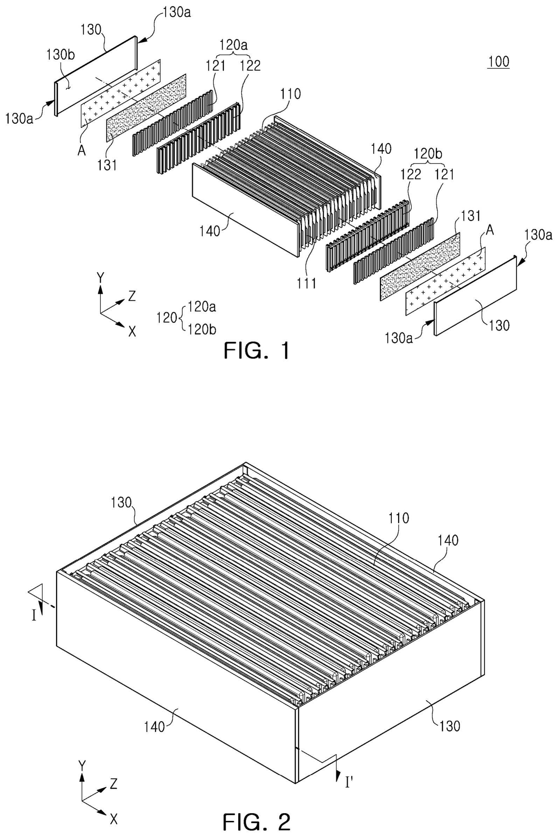

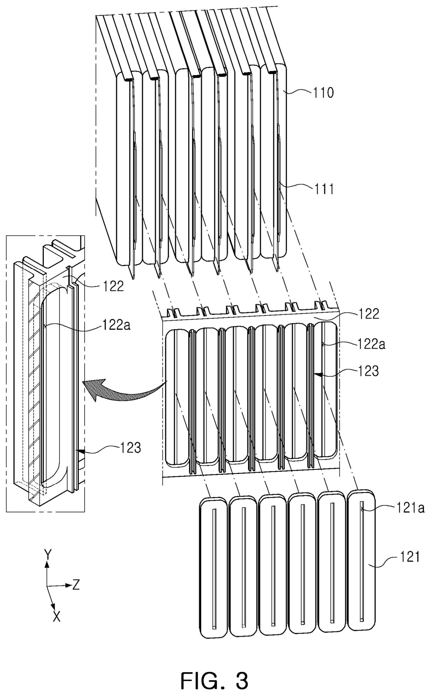

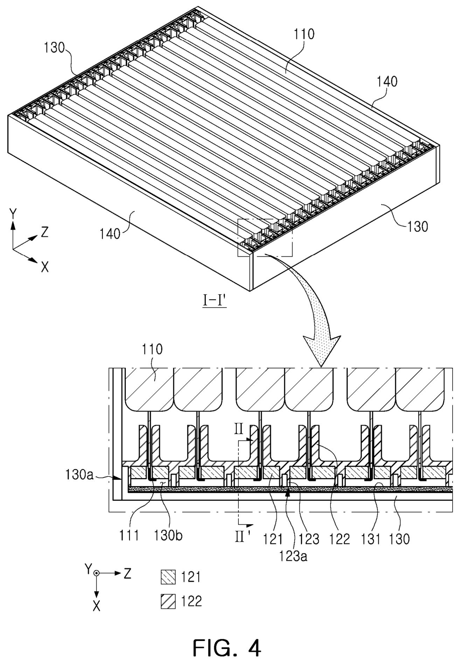

FIG. 1 is a schematic exploded perspective view of a battery apparatus 100 based on an embodiment of the present disclosure. In FIG. 1, the plurality of battery cells 110 and plurality of side plates 140 are not depicted as exploded. FIG. 2 is a schematic perspective view of a battery apparatus 100 based on an embodiment of the present disclosure. FIG. 3 is an exploded schematic perspective view of a battery cell 110, a busbar member 121, and a busbar plate 122 based on an embodiment of the present disclosure, and FIG. 4 is a perspective view schematically illustrating the area below line I-I' of FIG. 2, with some enlarged areas illustrated from a cross-sectional view perspective.

As illustrated in FIGS. 1 to 4, a battery apparatus 100 based on an embodiment of the present disclosure may include or comprise: (i) a battery cell 110 comprising a plurality of electrode leads 111 and provided in plural (e.g., a plurality of battery cells, each battery cell with its own electrode leads); (ii) a busbar assembly 120 comprising (a) a busbar member 121 connected to a portion of the plurality of electrode leads 111; and (b) a busbar plate 122 supporting the busbar member 121 and provided in plural (e.g., a plurality of busbar assemblies, each busbar assembly having a busbar member and a busbar plate); (iii) a cover plate 130 covering at least one busbar assembly 120 of the busbar assemblies 120; and comprising a flame-retardant member 131 and facing the busbar plate 122 in the at least one busbar assembly 120.

In FIG. 3, the busbar plate 122 comprises a plurality of protruding members 123 extending (e.g., in a direction (X-direction)) toward and in contact with the flame-retardant member 131 (e.g., in a thickness-direction cross-section (Y-Z plane) of the battery cell 110). The flame-retardant member 131 may contact protruding members 123 of the busbar plate 122 and exert pressure thereon so that the assembled components are secure. In certain embodiments, the cover plate 130 may be provided in plural, and a plurality of cover plates 130 may cover a plurality of busbar assemblies 120. For example, the cover plate 130 may cover at least a portion of the busbar assembly 120. In this case, the cover plate 130 may be spaced apart from the busbar assembly 120 (e.g., in a width direction (X-direction) of the battery cell 110). A cover plate 130 may overlap with or be aligned with at least a portion of the busbar assembly 120.

In some embodiments, each cover plate 130 may comprise end regions 130a that, once assembled, bend towards the battery cell 110. The space on the cover plate between the end regions 130a may be referred to as a central region 130b. With respect to the cover plate, the busbar assembly 120 may be disposed adjacent to the central region 130b.

In an embodiment, a cover plate 130 may cover a busbar assembly 120 connected to one electrode lead 111, and another cover plate 130 may cover another busbar assembly 120 connected to another electrode lead 111.

In providing a battery apparatus as described herein, when a thermal event (e.g., thermal runaway, thermal propagation, etc.) occurs in at least one battery cell 110 among the plurality thereof, gas and/or foreign substances may be discharged through the central region 130b. The cover plate 130 may prevent or minimize the exposure of gas and/or foreign substance to the exterior of the battery apparatus 100, which contributes to improved safety during use.

In certain embodiments, the central region 130b may be connected to a separate vent path formed in the battery apparatus 100, and any gas that is formed may be processed along a preset vent path.

In an embodiment, a flame-retardant member 131 may be disposed adjacent to the central region 130b. For example, the flame-retardant member 131 may be bonded to the cover plate 130 using an adhesive A. Suitable adhesives will be well known to the skilled artisan. The adhesive A may comprise, for example, a hot melt adhesive. However, a method of securing the flame-retardant member 131 to the cover plate 130 is not limited by the present disclosure, and a tape or the like may be applied thereto.

The flame-retardant member can be formed from fibrous insulators (e.g., glass, alumina, silica, ceramic, aramid) and/or expandable graphite, optionally in differentiated compositions between a body region and support members to tune insulation and expansion behavior.

For example, the flame-retardant member 131 may be formed of a material having electrical insulation properties. For example, the flame-retardant member 131 may comprise a fibrous material. For example, the flame-retardant member 131 may comprise (e.g., be formed of) at least one of glass fiber, alumina fiber, silica fiber, ceramic fiber, or aramid fiber. Combinations of these materials may also be used.

The flame-retardant member 131 may additionally or alternatively comprise a thermally expandable material, for example one capable of expanding at a temperature of approximately 150°C or higher. For example, in one embodiment, the flame-retardant member 131 may comprise a thermally expanding material at temperatures of 150°C or higher.

The flame-retardant member 131 may be appropriately prepared without undue experimentation by a skilled artisan considering a particle size (mesh) and an expansion rate of the expandable graphite. One example of a suitable expandable graphite is one that begins expanding at a temperature of approximately 160°C. Suitable expandable graphite may have a coefficient of thermal expansion (CTE), for example, from about 3 × 10⁻⁶/K to about 5.5 × 10⁻⁶/K.

In certain embodiments, flame-retardant member 131 may comprise one or more additional material, for example, materials with a CTE of about 9.0 × 10⁻⁶/°C or less. Examples of suitable materials that may also be included in the flame-retardant member 131 include, without limitation, alumina (Al₂O₃), magnesia (MgO), and the like. Alumina may be suitable, for example, as it displays a CTE in a range of 8.0 to 9.0 × 10⁻⁶/°C. Similarly, magnesia displays a CTE of about 8.0 × 10⁻⁶/°C or less.

By including such materials that volumetrically expand (e.g., at a temperature of approximately 150°C or more), the flame-retardant member 131 may expand when exposed to elevated temperatures (e.g., during a runaway event) to fill the central region 130b of the cover plate, thereby blocking the path through which gas, heat, flame, and the like, are transmitted between the adjacent battery cells 110 and quench any ongoing chemical reaction (e.g., runaway reaction). Use of such a material may impart excellent properties, such as thermal resistance, even at temperatures between 1200°C and 1300°C. In certain embodiments, the flame-retardant member 131 may be configured or designed to expand by within a certain range so as not to pressurize the electrode lead 111 and busbar member 121. Accordingly, the battery apparatuses and assemblies described herein may not only prevent short circuits in the battery cell but may also prevent or minimize thermal runaway by reducing heat propagation and heat transfer between the battery cells.

In certain configurations, a plurality of flame-retardant members 131 may be provided, wherein at least one flame-retardant member 131 is provided in a single cover plate 130. If included in plurality, each of the flame-retardant members 131 may be formed of dissimilar materials, provided that each of the materials satisfies the conditions described herein.

As described above, a cover plate 130 may comprise regions for coupling the cover plate to a plurality of side plates 140 so as to form an interior space for housing the battery apparatus. For example, the cover plate 130 may comprise end regions 130a that are bent for coupling to side plates 140. A cover plate, for example, may have one bent end region 130a for coupling to a first side plate and another bent end region 130a for coupling to another side plate 140. For this coupling, welding may be utilized or fastening elements such as a bolt or a rivet may be utilized.

Furthermore, in an embodiment, the cover plate 130 may be formed of a material having a certain level of rigidity to protect the busbar assembly 120 from physical impacts.

In an embodiment, the busbar member 121 may comprise a first type of connection slot 121a into which each of the plurality of electrode leads 111 is inserted. The busbar plate 122 may comprise a second type of connection slot 122a facing the first type of connection slot 121a and into which each of the plurality of electrode leads 111 is inserted. The busbar plate 122 may face the first type of connection slot 121a, or the busbar plate 122 may face the first type of connection slot 121a with another component (e.g., a separate insulator) interposed therebetween.

In certain embodiments, the first type of connection slot 121a and the second type of connection slot 122a may face or overlap each other (e.g., in the width direction (X-direction) of the battery cell 110).

Each of the electrode leads 111 may pass through the second type of connection slot 122a of the busbar plate 122 and then through the first type of connection slot 121a. The end of each of the electrode leads 111 may be folded or bent to contact the busbar member 121. A contact region between the end of the electrode lead 111 and the busbar member 121 may be welded.

In certain embodiments, the number of first type of connection slots 121a and second type of connection slots 122a may be the same as the number of electrode leads 111. For example, one electrode lead 111 may be inserted into a first type of connection slot 121a and then into the second type of connection slot 122a.

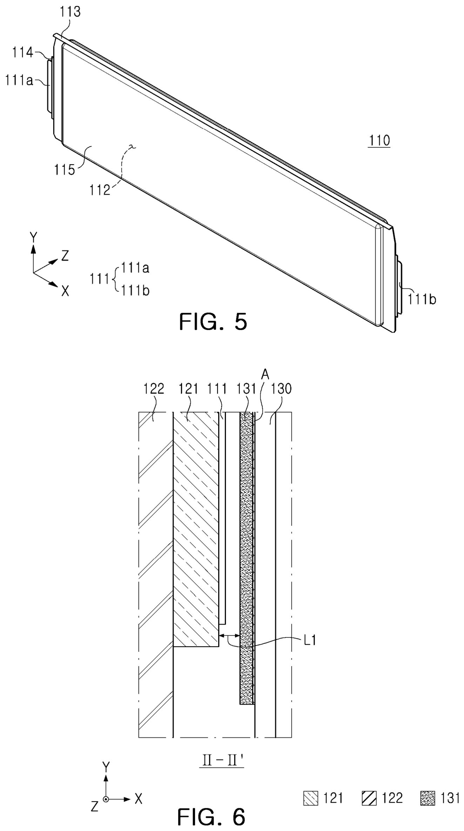

FIG. 5 is a schematic perspective view of a battery cell 110 according to an embodiment of the present disclosure. In certain embodiments, the battery cell 110 may be a rechargeable and dischargeable lithium-ion battery cell. In certain embodiments, the battery cell is a pouch-type battery cell. In certain embodiments, the battery cell is a bidirectional pouch cell. In the bidirectional pouch cell, a plurality of electrode leads of the battery cell may extend past an edge of a protecting external material 115, as depicted.

For example, the external material 115 of the battery cell 110 may be an outer surface of the battery cell 110, and a first electrode lead 111a may extend past an edge of the protecting external material on one side, and a second electrode lead 111b may extend past an edge of the protecting external material on another side of the external material 115.

The protecting external material 115 may be folded so that ends of the external material 115 are in contact with each other, and then, three sides or three edges thereof may be sealed thereby forming an inner cavity for and protecting the electrode assembly. Accordingly, the inner cavity 112 provided by the external material 115 may be sealed. The external material 115 may include a plurality of sealing portions 113.

The inner cavity 112 may comprise at least one cathode plate, at least one anode plate, at least one separator, and an electrolyte. As shown in FIG. 5, a first electrode lead 111a may be electrically connected to at least one cathode plate, and the second electrode lead 111b may be electrically connected to at least one anode plate.

A lead film 114 formed of an electrically insulating material may be disposed between the first electrode lead 111a and the external material 115 and between the second electrode lead 111b and the external material 115.

In such a configuration, one busbar assembly 120 may be connected to the plurality of first electrode leads 111a, and another busbar assembly 120 may be connected to the plurality of second electrode leads 111b. A plurality of busbar assemblies 120 may be provided as described above, wherein each busbar assembly 120 comprises a first busbar assembly 120a disposed on one side of the plurality of battery cells 110 and a second busbar assembly 120b disposed on the other side of the plurality of battery cells 110. The plurality of battery cells 110 may be arranged such that the plurality of first electrode leads 111a overlap or face each other (e.g., in a thickness direction (Z-direction) of the battery cell 110), and a plurality of second electrode leads 111b overlap or face each other (e.g., in the thickness direction (Z-direction) of the battery cell 110). As shown in the figures, one side plate 140 may face a battery cell 110 disposed in an outermost end of one side of the plurality of battery cells 110, and another side plate 140 may face a battery cell 110 disposed at an outermost end of the other of the plurality of battery cells 110. The plurality of battery cells 110 may be disposed so that respective wide surfaces thereof face each other, as shown, for example, in FIGs. 1 and 2. The plurality of battery cells 110 may be arranged, for example, stacked. The first busbar assembly 120a and the second busbar assembly 120b may be spaced apart from each other (e.g., in the width direction (X-direction) of the battery cell 110) with the plurality of battery cells 110 interposed therebetween.

In certain embodiments, the first busbar assembly 120a may comprise a plurality of busbar members 121 that are electrically connected to the plurality of first electrode leads 111a and at least one busbar plate 122 supporting the plurality of busbar members 121. The second busbar assembly 120b may similarly comprise a plurality of busbar members 121 electrically connected to a plurality of second electrode leads 111b and at least one busbar plate 122 supporting the plurality of busbar members 121. The plurality of battery cells 110 may be connected in series and/or parallel, but this is not necessarily limited by the present disclosure.

Electrode leads may be connected, for example, by inserting a first electrode lead 111a first into a second type of connection slot 122a in the busbar plate 122 of the first busbar assembly 120a, and then into a first type of connection slot 121a in the busbar member 121 in the same first busbar assembly 120a. The first electrode lead 111a may then be welded to the busbar member 121. The same principle may be applied to the remaining first electrode leads 111a and second electrode leads 111b.

For example, a second electrode lead 111b may be inserted into a second type of connection slot 122a in the busbar plate 122 of the second busbar assembly 120b, a second electrode lead 111b may be inserted into a first type of connection slot 121a of the busbar member 121 in the same second busbar assembly 120b and welded. The same principle may be applied to the remaining second electrode leads 111b.

The busbar member(s) 121 of the first busbar assembly 120a and the busbar member(s) 121 of the second busbar assembly 120b may each be connected to a controller (e.g., a Battery Management System, BMS) and/or a sensor measuring temperature, voltage, or the like.

In an embodiment, the busbar plate 122 and the protruding member 123 may comprise (e.g., be made from) an electrically insulating material, for example, an electrically insulating polymer.

In an embodiment, the busbar plate 122, including the protruding member 123, may be manufactured, e.g., using integrated injection molding or double injection molding. By employing such methods, the manufacturing process may be simplified and avoid a lengthy and complex process of assembling the busbar plate 122 with the protruding member 123 and increase assembly efficiency.

In certain embodiments wherein it is desirable to form the busbar plate 122 and protruding members 123 from different materials, the busbar plate 122 and the protruding member 123 may be double-injected. In this case, both the busbar plate 122 and the protruding member 123 may be independently formed from an electrically insulating polymer, but specific types for each of the busbar plate and protruding members thereof may differ. Examples of suitable polymers include, but are not limited to, polyethylene (PE) and polycarbonate (PC).

In one exemplary embodiment, the busbar plate 122 comprises polyethylene (PE) and the protruding members 123 comprise polycarbonate (PC). In such embodiments, the busbar plate 122 and the protruding members 123 may be formed using double-injection techniques.

Conversely, when both the busbar plate 122 and the protruding member 123 are formed of the same material, e.g., polyethylene (PE), the busbar plate 122 and the protruding member 123 may be formed using integral injection techniques. In such embodiments, a separate assembly process to couple the protruding member 123 to the busbar plate 122 may be advantageously avoided.

In one embodiment, a plurality of second type of connection slots 122a may be disposed alternately (e.g., in the thickness, or Z-direction) such that the second connection slots 122a alternate with the protruding members 123. For example, one protruding member 123 may be disposed between a plurality of second type of connection slots 122a.

FIG. 6 schematically illustrates a portion of a busbar plate 122, a busbar member 121, an electrode lead 111, a flame-retardant member 131, and a cover plate 130 according to an embodiment of the present disclosure, taken along line II-II' of FIG. 4. FIG. 6 is a width-direction cross-sectional view (X-Y plane) of a battery cell 110.

As illustrated in FIGS. 1 to 6, in an embodiment of the present disclosure, the busbar plate 122 may comprise a plurality of protruding members 123 (e.g., in the thickness-direction cross-section (Y-Z plane) of the battery cell 110). Here, the plurality of protruding members 123 may be spaced apart from each other, and one protruding member 123 may be disposed between adjacent first electrode leads 111a. Similarly, a busbar plate 122 supporting another busbar member 121 connected to a second electrode lead 111b may comprise a plurality of protruding members 123 (e.g., in the thickness-direction cross-section (Y-Z plane)). Here, the plurality of protruding members 123 may be spaced apart from each other (e.g., in the thickness direction (Z-direction) of the battery cell 110), and one protruding member 123 may be disposed between adjacent second electrode leads 111b. In other words, a first busbar plate 122 may comprise a plurality of protruding members 123 facing the plurality of first electrode leads 111a, and another busbar plate 122 may comprise a plurality of protruding members 123 that face the plurality of second electrode leads 111b.

Said differently, protruding members 123 may be disposed between and spaced apart from adjacent electrode leads 111. The protruding member 123 may be disposed between and spaced apart from adjacent first electrode leads 111a and between and spaced apart from adjacent second electrode leads 111b.

According to the disclosure, each protruding member 123 may be in contact with a flame-retardant member 131 at a certain distance. When the flame-retardant member 131 expands at a specific temperature, the protruding member 123 may prevent the flame-retardant member 131 from excessively expanding and interfering with or displacing the busbar member 121. Accordingly, the electrical stability and operational safety of the battery apparatus 100 may be ensured even during thermal runaway events.

In certain embodiments, at least a portion of the busbar plate 122 may be disposed between adjacent electrode leads 111 adjacent to each other. The portion of the busbar that is disposed between adjacent electrode leads comprises or consists of the protruding member 123, as described herein.

For example, the flame-retardant member 131 and the busbar member 121 may be spaced apart from each other by a first separation distance L1. In an embodiment, the flame-retardant member 131 may be spaced apart from the busbar member 121 by a distance of 1 mm or more and 5 mm or less, and the first separation distance L1 may be any value within the range of 1 mm or more and 5 mm or less. Accordingly, unwanted interference between the flame-retardant member 131 and the busbar member 121 may be prevented, and the electrical stability, even under thermal stress, of the battery apparatus 100 may be improved.

In an embodiment, the flame-retardant member 131 may also be spaced apart from the electrode leads 111.

In certain embodiments, each protruding member may be in contact with the flame-retardant member 131 at an end 123a, which may extend beyond a first section of the protruding member towards the cover plate, thereby further spacing the flame-retardant member 131 and busbar member 121 from each other.

For example, the flame-retardant member 131 may be shaped and formed of a material that expands in a controlled manner. The expansion should be limited such that the surface facing the electrode leads 111 does not come into contact with the electrode leads 111 or the busbar member 121 (e.g., in the height-direction cross-section (X-Z plane) of the battery cell 110). Additionally, the flame-retardant member 131 may be provided with a thickness or volume that is sufficient to prevent the surface of the flame-retardant member 131 that faces the electrode lead 111 from contacting the electrode lead 111 and the busbar member 121 when the flame-retardant member 131 expands.

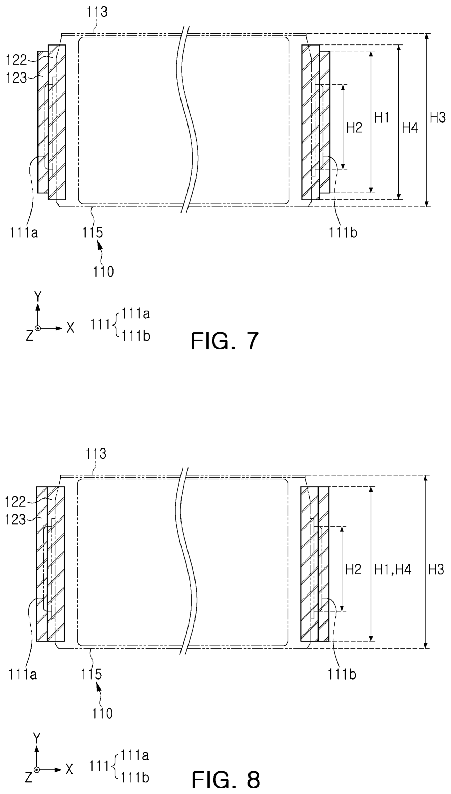

FIG. 7 is a schematic front view of a busbar plate 122, a protruding member 123, and a battery cell 110 according to an embodiment of the present disclosure, wherein the busbar plate 122 and the protruding member 123 are illustrated as cross-sectional views, and the battery cell 110 is illustrated as a virtual line. As illustrated in FIG. 7, in an embodiment of the present disclosure, a first height H1, which is the height of the protruding member 123 (e.g., in the height-direction cross-section (X-Y plane) or the width-direction cross-section (X-Y plane) of the battery cell 110), may be greater than or equal to a second height H2, which is the height of the electrode lead 111, and may be less than or equal to a third height H3, which is the height of the battery cell 110. In this case, a fourth height H4, which is the height of the busbar plate 122, may be greater than the first height H1 and may be less than or equal to the third height H3.

Furthermore, in an embodiment, a fourth height H4 may be greater than or equal to the second height H2, and may be less than or equal to the third height H3. Here, the first height H1 may be less than the fourth height H4.

The above-described matters may be equally applied to the first electrode lead 111a and the second electrode lead 111b. Accordingly, the above-described matters may be equally applied to the busbar plate 122 facing the first electrode lead 111a and the busbar plate 122 facing the second electrode lead 111b.

Accordingly, while the volume of each protruding member 123 is minimized, the flame-retardant member 131 may be separated from the electrode lead 111, and the flame-retardant member 131 may be separated from the busbar member 121. The design avoids mechanical interference with leads or busbars during thermal expansion by specifying separation distances (e.g., L1 of 1-5 mm) and relative height relationships among the protruding members, busbar plate, electrode leads, and the cell to preserve electrical stability and energy density.

FIG. 8 is a schematic front view of a busbar plate 122, a protruding member 123, and a battery cell 110 according to another embodiment of the present disclosure. In FIG. 8, the busbar plate 122 and the protruding member 123 are illustrated as cross-sectional views, and the battery cell 110 is illustrated as a virtual line.

As illustrated in FIG. 8, in an embodiment of the present disclosure, a first height H1, which is a height of the protruding member 123 in the height-direction cross-section (X-Y plane) or the width-direction cross-section (X-Y plane) of the battery cell 110, may be greater than or equal to a second height H2, which is a height of the electrode lead 111, and may be less than or equal to a third height H3, which is a height of the battery cell 110. In this case, a fourth height H4, which is a height of the busbar plate 122, may be at least equal to the first height H1.

In other words, a height of the busbar plate 122 in a Y-direction in the height-direction cross-section (X-Y plane) of the battery cell 110 may be greater than or equal to a height of the electrode lead 111 in the Y-direction and may be less than or equal to a height of the battery cell 110 in the Y-direction. Furthermore, the height of the protruding member 123 in the Y-direction in the height-direction cross-section (X-Y plane) of the battery cell 110 may be at least equal to the height of the busbar plate 122 in the Y-direction.

The above-described matters may be equally applied to the first electrode lead 111a and the second electrode lead 111b. Accordingly, the above description may be equally applied to the busbar plate 122 facing the first electrode lead 111a and the busbar plate 122 facing the second electrode lead 111b.

Accordingly, the rigidity of the busbar plate 122 may be improved. Furthermore, when a battery cell 110 case is large, the rigidity of the busbar plate 122 may be improved, particularly when the electrode leads 111 are long (the height in the Y-direction).

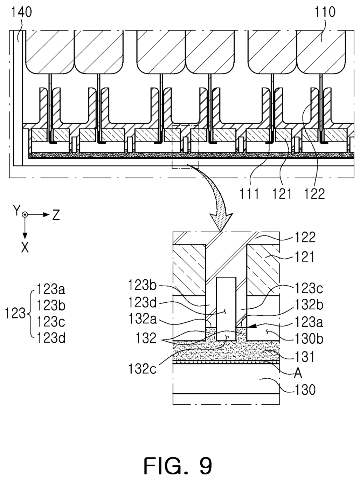

FIG. 9 is a schematic cross-sectional view of a portion of a battery apparatus 100 according to another embodiment of the present disclosure. As illustrated in FIG. 9, in an embodiment of the present disclosure, the flame-retardant member 131 may comprise a support member 132 that faces or contacts a protruding member 123 of the busbar plate 122.

The support member 132 may protrude from the flame-retardant member 131 toward the protruding members 123 of the busbar plate 122. In certain embodiments, the support member 132 may be in contact with the protruding member(s) 123.

In certain embodiments, a protruding member 123 may comprise a first protruding portion 123b extending toward the flame-retardant member 131, a second protruding portion 123c spaced apart from the first protruding portion 123b (e.g., in the thickness direction (Z-direction) of the battery cell 110) and extending toward the flame-retardant member 131, and a groove 123d between the first protruding portion 123b and the second protruding portion 123c.

Here, the end 123a of each protruding member 123 may comprise an end of the first protruding portion 123b and an end of the second protruding portion 123c, the end (of the first protruding portion 123b and the end of the second protruding portion 123c) may be in contact with a support member 132.

In an embodiment, each support member 132 may have a shape corresponding to (e.g., complementary to) the protruding members 123. For example, a support member 132 may also comprise a first supporting portion 132a extending toward the first protruding portion 123b of the protruding member 123 so as to be in contact with the first protruding portion 123b, and a second supporting portion 132b extending toward the second protruding portion 123c of the protruding member 123 so as to be in contact with the second protruding portion 123c. Each support member 132 may comprise a support notch 132c between the first supporting portion 132a and the second supporting portion 132b, complementary to the groove 123d on the protruding member. Alternatively, the support members may comprise notches while the protruding members comprise grooves. The groove 123d (e.g., of the busbar plate 122) and the notch 132c (e.g., of the flame-retardant member 131) may face each other and may be connected to each other. A separate flame-retardant member may be disposed in a space between the notch 132c and the groove 123d or this space may be utilized as a vent path, or the like.

In an embodiment, a plurality of support members 132 may be provided, and the number of support members 132 may be at least equal to the number of protruding members 123.

As described above, protruding members 123 and the flame-retardant member 131 may be variously shaped, depending on the specifications intended and required by the battery apparatus 100.

Additionally, in some cases, the protruding members 123 formed on the busbar plate 122 may comprise only a first protruding portion 123b and/or a second protruding portion 123c extending toward the flame-retardant member 131, without a groove 123d.

In an embodiment, support members 132 may comprise (e.g., be formed of) a first fibrous material, and the region of the flame-retardant member 131, excluding the support members 132 (e.g., a body region of the flame-retardant member), may comprise a second fibrous material. Examples of suitable fibrous materials include, without limitation, glass fiber, and ceramic fiber. In certain embodiments, the support members and the body region of the flame-retardant member 131 each comprise fibrous materials, but the specific materials of each are different. For example, the first fibrous material is glass fiber, and the second fibrous material is ceramic fiber.

In an embodiment, the body region of the flame-retardant member may comprise a second fibrous material and/or expandable graphite. For example, the support members 132 may comprise a first fibrous material, and the body region of the flame-retardant member 131 comprises a second fibrous material or expandable graphite.

In embodiments wherein the support member 132 comprises expandable graphite, the body region of the flame-retardant member may comprise a second fibrous material.

In certain embodiments, the composition of the support members 132 and the composition of the body region of the flame-retardant member differ from each other. For example, in certain embodiments, support members 132 comprise a first fibrous material and may optionally also other materials (other than expandable graphite). In such embodiment, the composition of the body region of the flame-retardant member may comprise a second fibrous material or expandable graphite and optionally also other materials provided they are different from the first fibrous material included in the support members.

When the support members 132 comprise expandable graphite, the support members do not comprise the first fibrous material but may comprise other materials. In this case, the composition of the body region of the flame-retardant member may comprise the second fibrous material and further comprise other materials but not expandable graphite. The "additional materials" in the support members and body region of the flame-retardant member may be the same or may be different.

In an embodiment, the body region of the flame-retardant member may be disposed at a greater distance from the electrode lead 111 (in a width direction (X-direction) of the battery cell 110) than the support member 132 is disposed. Accordingly, the material of the support member 132, which is disposed closer to the electrode lead 111 than the body region of the flame-retardant member, may comprise (e.g., be formed of) a material with higher heat resistance.

For example, the first fibrous material may have a heat-resistant temperature of 1250°C or higher and 1300°C or less, and the second fibrous material may have a heat-resistant temperature of 1200°C or higher and 1250°C or less.

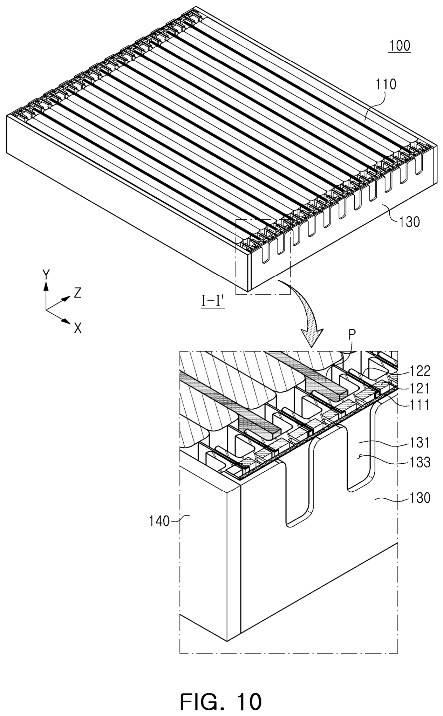

FIG. 10 is a perspective view schematically illustrating a region below line I-I' of FIG. 2, schematically illustrating a battery apparatus 100 based on another embodiment of the present disclosure. Here, some enlarged regions are illustrated from a cross-sectional perspective.

As illustrated in FIG. 10, in an embodiment of the present disclosure, the one cover plate 130 may comprise a first type of vent hole 133 facing a flame-retardant member 131. In an embodiment, the cover plate may comprise a plurality of the first type of vent holes 133.

The first type of vent holes 133 may face the flame-retardant member 131. Gases, flames, and the like, generated from the battery cell 110 may be cooled upon contact with the flame-retardant member 131 or force thereof may be weakened, and some residual gas may be vented through the first type of vent holes 133.

The first type of vent hole 133 or plurality thereof may be of a slot type and/or a notch type. For example, in some configurations, a portion of the plurality of first type of vent holes 133 may comprise slots, and the remaining first type of vent holes 133 may comprise notches. In other configurations, all of the first type of vent holes 133 may be of a slot type, or all of the first type of vent holes 133 may be of a notch type. This is not limited by the present disclosure.

Furthermore, in an embodiment, at least one pad member P may be provided between each battery cell 110 within a plurality of battery cells 110. The pad member P may comprise (e.g., be formed of) mica, ceramic sheets, or the like.

In an embodiment, a plurality of pad members P may be provided, and, in some cases, an end of each pad member P may extend into a region between the electrode leads 111. However, this is not necessarily limited by the present disclosure and may be appropriately selected depending on the specifications required for the battery apparatus 100.

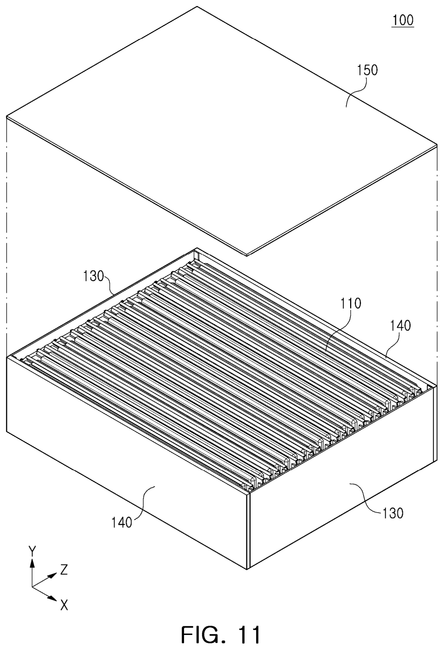

FIG. 11 is a schematic perspective view of a battery apparatus 100 based on another embodiment of the present disclosure, wherein a case frame 150 is illustrated in an exploded state. As illustrated in FIGS. 1, 5 and 11, in an embodiment of the present disclosure, a battery assembly comprising the battery apparatus 100 may further comprise a plurality of side plates 140 disposed to couple to at least one cover plate 130 of the battery apparatus and form an internal space, a case frame 150 coupled to each side plate 140 and spaced from the plurality of battery cells 110 in the battery apparatus by a second distance.

The case frame 150 may overlap or cover an upper portion of the plurality of battery cells, thereby protecting the plurality of battery cells 110 from external impacts, may prevent foreign substances from entering the plurality of battery cells 110, and may minimize the emission of gases, flames, and the like, discharged from the plurality of battery cells 110 to the outside of the battery apparatus 100.

The case frame 150 may be coupled to the plurality of side plates 140. A coupling method may be welding or physical coupling using bolts or rivets but is not necessarily limited by the present disclosure.

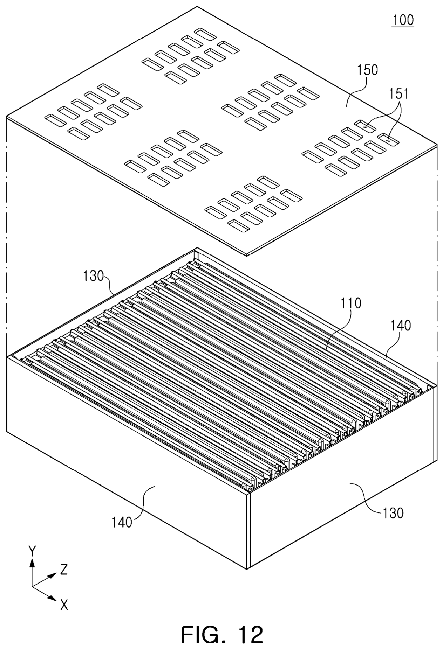

FIG. 12 is a schematic perspective view of a battery apparatus 100 according to another embodiment of the present disclosure, and the case frame 150 is illustrated in an exploded state. As illustrated in FIG. 12, in an embodiment of the present disclosure, the case frame 150 may comprise at least one second type of vent hole 151. In certain embodiments, the case frame comprises a plurality of a second type of vent holes 151. The plurality of second type of vent holes 151 may be holes formed in the case frame 150. The plurality of second type of vent holes 151 may face the plurality of battery cells 110. The plurality of second type of vent holes 151 may form a portion of a gas discharge path.

The first type and second type of vent holes work together, for example, in that the first-type vent holes (e.g., slots or notches) in the cover plate facing the flame-retardant member create a managed vent path, while the second-type of vent holes in the case frame complete a discharge pathway and provide impact protection and ingress control.

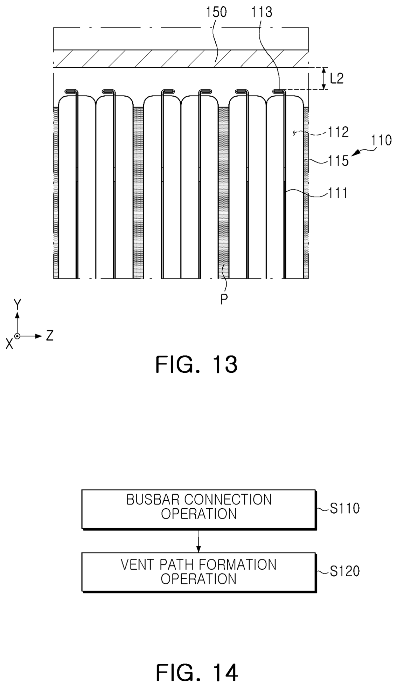

FIG. 13 is a schematic cross-sectional view of a portion of a battery apparatus 100 according to another embodiment of the present disclosure. In FIG. 13, the case frame 150 is illustrated from a side cross-sectional view perspective, and the battery cells 110 and pad members are not illustrated from the cross-sectional view perspective. As illustrated in FIGS. 1 and 13, in an embodiment of the present disclosure, the case frame 150 may be spaced apart from the plurality of battery cells 110, e.g., in a height direction.

In an embodiment, the case frame 150 may be spaced apart from a sealing portion 113 of the battery cells 110 by a second separation distance L2.

In certain embodiments, the space formed between the case frame 150 and the battery cells 110 or between the case frame 150 and the sealing portion 113 by the second distance L2 may be utilized as a vent path. For example, gas not discharged to a side of the battery cell 110 may flow along the vent path formed in an upper portion of the battery cells 110. Furthermore, the gas flowing along the upper portion may be discharged to the outside of the battery apparatus 100 through the second vent hole 151. The vent path may be designed in a manner suitable for the specifications required for the battery apparatus 100.

Meanwhile, as another aspect, the present disclosure provides a method of manufacturing the battery apparatus 100. FIG. 14 schematically illustrates a method of manufacturing a battery apparatus 100 based on an embodiment of the present disclosure. As illustrated in FIGS. 1 to 14, the present disclosure provides a method of manufacturing a battery apparatus 100 as disclosed herein. The method comprises, for example, electrically connecting the plurality of electrode leads 111 to the busbar member 121 (in a busbar connection operation (S110)), and bringing a protruding member 123 of the busbar plate 122 into contact with the flame-retardant member 131 (in a vent path formation operation (S120)).

In an embodiment, the busbar connection operation (S110) may include or comprise folding or bending an end of an electrode lead 111 and welding the end thereof to the busbar member 121. Furthermore, the busbar connection operation (S110) may include or comprise connecting a plurality of battery cells 110 in series and/or in parallel.

Additionally, the busbar connection operation (S110) may include or comprise securing a plurality of busbars to the busbar plate 122. However, an execution order of the above-described operations may be changed.

The vent path formation operation (S120) may include or comprise arranging a plurality of battery cells 110 so that gases, flames, and the like, generated from the battery cells 110 may be discharged toward the electrode leads 111 of the battery cells 110.

Furthermore, the vent path formation operation (S120) may include or comprise disposing the flame-retardant member 131 to face the electrode leads 111 of the battery cells 110. Furthermore, as an example, the vent path formation operation (S120) may include or comprise attaching the flame-retardant member 131 to the cover plate 130.

Furthermore, in an embodiment, the vent path formation operation (S120) may comprise or include, as illustrated in FIG. 10, bringing the protruding member 123 of the busbar plate 122 into contact with the flame-retardant member 131 such that a contact region between the protruding member 123 and the flame-retardant member 131 does not overlap at least one first-type vent hole 133 provided in the at least one cover plate 130 (e.g., in the width direction (X-direction) of the battery cell 110).

For example, the contact region, which is a region with which the flame-retardant member 131 and the protruding member 123 come into contact, may not face the first type of vent holes 133 (e.g., in the width direction (X-direction) of the battery cell 110). Additionally, the contact region may not overlap the first type of vent hole 133 (e.g., in the width direction (X-direction) of the battery cell 110). Furthermore, the contact region may be disposed to be offset from the first type of vent hole 133.

Additionally, the contact region may not overlap the electrode lead 111 (e.g., in the width direction (X-direction) of the battery cell 110) and may not face the electrode lead 111.

Accordingly, a large area of contact between the gas, flame, and the like, flowing toward the electrode lead 111 and the flame-retardant member 131 may be secured. Furthermore, the gas, flame, and the like, may be cooled by the flame-retardant member 131 immediately before the gas, flame, and the like, are discharged to the outside of the battery apparatus 100 through the first type of vent hole 133. Furthermore, flame discharge into the first type of vent hole 133 from a location close to the first type of vent hole 133 may be blocked or minimized.

Furthermore, when a plurality of battery apparatuses 100 are provided, the present disclosure may prevent or minimize the effects of gases, flames, and the like, discharged through the first type of vent hole 133 on another adjacent battery apparatus 100.

The above-described contents are merely an example of the application of the principles of the present disclosure, and other components may be included or substituted without departing from the scope of the present disclosure. Furthermore, the above-described embodiments may be substituted or combined with each other.

## Claims

1. A battery apparatus, comprising:
a plurality of battery cells comprising a plurality of electrode leads;
a plurality of busbar assemblies, each busbar assembly comprising (i) a busbar member connected to at least a portion of the plurality of electrode leads and (ii) a busbar plate supporting the busbar member; and
at least one cover plate comprising a flame-retardant member and facing each busbar assembly,
wherein the busbar plate comprises one or more protruding members extending toward and in contact with the flame-retardant member.

2. The battery apparatus of claim 1, wherein each of the one or more protruding members is disposed between adjacent electrode leads.

3. The battery apparatus of claim 1 or 2, wherein the busbar plate comprises a plurality of protruding members.

4. The battery apparatus of any one of claims 1 to 3, wherein each protruding member has a height that is greater than or equal to a height of each respective electrode lead and less than or equal to a height of each battery cell.

5. The battery apparatus of claim 4, wherein the height of the busbar plate is greater than or equal to the height of the electrode lead and less than or equal to the height of the battery cell, and the height of each of the protruding members is equal to or greater than the height of the busbar plate.

6. The battery apparatus of claim 4, wherein the height of the busbar plate is greater than or equal to the height of the electrode lead and less than or equal to the height of the battery cell, and the height of each of the protruding members is less than the height of the busbar plate.

7. The battery apparatus of any one of claims 1 to 6, having one or more of the following characteristics (i) to (iii), respectively alone or in combination:
(i) wherein the busbar plate and each of the protruding members comprise an electrically insulating material, and/or
(ii) wherein the busbar plate and the protruding members thereof are formed by integrated injection molding or double injection molding, and/or
(iii) wherein the flame-retardant member comprises a fibrous material or expandable graphite.

8. The battery apparatus of any one of claims 1 to 7, having one or more of the following characteristics (i) to (iii), respectively alone or in combination:
(i) wherein the flame-retardant member comprises a body region and one or more support members extending from the body region and facing or contacting one or more of the protruding members of the busbar plate, and/or
(ii) wherein the one or more support members comprise a first fibrous material or expandable graphite, and the body region of the flame-retardant member comprises a second fibrous material or expandable graphite, wherein the first fibrous material or expandable graphite is different than the second fibrous material or expandable graphite, and/or
(iii) wherein the flame-retardant member is spaced apart from the busbar member.

9. The battery apparatus of claim 8, wherein the flame-retardant member is spaced apart from the busbar member by a distance of 1 mm or more and 5 mm or less.

10. The battery apparatus of any one of claims 1 to 9, wherein the at least one cover plate comprises at least one first type of vent hole facing the flame-retardant member.

11. The battery apparatus of claim 10, wherein the at least one cover plate comprises a plurality of the first type of vent hole, and wherein the plurality of the first type of vent holes are of a slot type or a notch type.

12. A battery assembly comprising:
the battery apparatus according to claim 1;
a plurality of side plates disposed to couple to at least one cover plate of the battery apparatus;
and
a case frame coupled to the plurality of side plates and spaced from the plurality of battery cells in the battery apparatus by a second distance.

13. The battery assembly of claim 12, wherein the case frame comprises at least one second type of vent hole.

14. A method of manufacturing the battery apparatus of claim 1, the method comprising:
electrically connecting the plurality of electrode leads to the busbar member; and
bringing the one or more protruding members of the busbar plate into contact with the flame-retardant member.

15. The method of manufacturing a battery apparatus of claim 14, wherein the one or more protruding members are brought into contact with the flame-retardant member to form a contact region between the protruding member and the flame-retardant member, wherein the contact region does not overlap with the first type of vent hole.
